# EUROPEAN PATENT APPLICATION

(11) **EP 3 257 820 A1**
(43) Date of publication of application: **20.12.2017**
(21) Application number: 17175445.0
(22) Date of filing: 12.06.2017
(51) Int. Cl.: C02F 1/48, B03C 1/28, F24D 19/00, B03C 1/033

(54) **A MAGNETIC SEPARATION DEVICE FOR SEPARATING FERROUS MATERIAL CONTAINED IN A LIQUID CIRCULATING IN A HEATING CIRCUIT**

(30) Priority: 13.06.2016 IT UA20164318
(71) Applicant: CREA S.r.l., 61032 Fano (Pesaro) (IT)
(72) Inventor: FESTA, Aldo, 61122 Pesaro (IT)
(74) Representative: Dall'Olio, Christian

(57) **Abstract**

A magnetic separation device (1) for separating ferrous material contained in a liquid circulating in a heating circuit, comprising: a first container (2) comprising an inlet (20), an outlet (21), a discharge (22); a magnet (4); a second container (3) arranged internally of the first container (2) and comprising a plurality of openings (30); a casing (5) for containing the magnet (4) arranged at least partially internally of the second container (3), so as to be accessible from outside the magnetic separation device (1).

The magnetic separation device (1) is designed so that it can assume a use configuration (A), in which the inlet (20) is in fluid communication with the outlet (21) and the magnet (4) is inserted in the casing (5), and a washing configuration (B), in which the inlet (20) is in fluid communication with the discharge (22) and the magnet (4) is extracted from the casing (5).

The openings of the plurality of openings (30) of the second container (3) are reciprocally arranged so that when the device is in the use configuration (A), the liquid crosses the second container (3) and strikes the casing (5) so that the magnet (4) attracts the ferrous material contained in the liquid, and so that when the device is in the washing configuration (B), the liquid crosses the second container (3) drawing the ferrous material towards the discharge (22).

## Description

The present invention relates to the technical sector concerning magnetic separation devices. In particular, the invention relates to a magnetic separation device for separating ferrous material contained in a liquid circulating in a heating circuit. Further, the invention relates to a method for separating, by means of a magnetic separation device, the ferrous material contained in a liquid circulating in a heating circuit and for washing the magnetic separation device.

A heating circuit is a closed circuit for production and distribution of heat. It comprises a boiler and heat dispensing devices (for example radiators) arranged downstream of the boiler: in this circuit a liquid circulates which is heated by the boiler, is conveyed to the dispensing devices of the heat and returns to the boiler.

During the functioning of the heating circuit, ferrous material accumulates in the liquid which in the long-run might ruin the components of the boiler.

To limit this problem, a magnetic separation device is known, for separating the ferrous material contained in the liquid, which is arranged upstream of the boiler.

The known magnetic separation device comprises a container for liquids comprising an inlet for a liquid comprising ferrous material, an outlet for the liquid and a discharge for the liquid. In particular, the container is defined by a body having a beaker conformation in which the inlet, the outlet and the discharge are fashioned, and by a cover fixed to the body.

The known magnetic separation device further comprises a magnet fixed to the cover of the container, a casing for containing the magnet, and a filter mesh. In particular, when the cover is fixed to the body of the container, the magnet is inside the container, the casing clads the magnet and the filter mesh surrounds the casing.

In the functioning of the above-mentioned magnetic separation device of known type, when in use, the cap is fixed to the body of the container and the casing and the filter mesh are in the container. In this situation the discharge is closed by means of a cap and the liquid flows from the inlet and out of the outlet: a part of the liquid will strike the casing so that the magnet attracts the ferrous material contained in the liquid and the filter mesh retains any residues such as algae and sand. However, a part of the liquid might exit from the outlet without striking the magnet; in this case the outlet will be crossed by ferrous material.

After a determined period of use of the above-mentioned magnetic separation device it is necessary to proceed to cleaning thereof. For this purpose it is necessary to close the inlet, close the outlet and open the discharge (by removing the cap) for emptying the residual liquid contained in the container. Thereafter, in order to proceed to cleaning the casing and the filter mesh, the cover of the container is removed, the casing and the filter mesh are extracted from the container and washed separately using running water.

Lastly, in order to newly predispose the container for use, it is necessary to newly assemble all components thereof, i.e. the body of the container, the filter mesh, the casing and the cover of the container bearing the magnet.

Therefore the known magnetic separation device for the purpose of washing requires periodically de-assembling and reassembling.

In the light of the above, the aim of the present invention consists in obviating the above-mentioned drawbacks.

In particular it is an aim of the present invention to provide a magnetic separation device able to ensure maximum effectiveness of the removal of the ferrous material from the liquid and, at the same time, which can be cleaned without de-assembly.

The above aim is attained by a magnetic separation device for separating ferrous material contained in a liquid circulating in a heating circuit, according to claim 1. Further, the above aim is also attained by a method for separating by means of a magnetic separation device, the ferrous material contained in a liquid circulating in a heating circuit and for washing the magnetic separation device.

The second container is suitable for containing liquids. This ensures that when the magnetic separation device is in the use configuration, the liquid crosses the second container, striking the casing, in turn at least partly contained in the second container, so that the magnet attracts the ferrous material contained in the liquid: this peculiarity of the second container ensures maximum effectiveness in removal of the ferrous material from the liquid, which will remain in the majority in adherence to the casing.

The liquid advantageously crossing the outlet will be free of ferrous material and the components of the boiler will require less maintenance.

Further, the magnetic separation device of the invention is designed for being able to assume a washing configuration so that on completion of washing it does not have to be demounted (as occurs in the above-mentioned prior art). Indeed, the fact that the second container is suitable for containing liquids, and the particular positioning of the openings of the plurality of openings, enables ensuring an excellent cleaning of the magnetic separation device: in the washing configuration the liquid crosses the second container, drawing the ferrous material that previously adhered to the casing, towards the discharge.

Specific embodiments of the invention will be described in the following of the present description, according to what is set down in the claims and with the aid of the accompanying tables of drawings, in which:
- figures 1 and 2 illustrate respective lateral and plan views of a first embodiment of the magnetic separation device of the present invention;
- figure 3 is a section view of figure 1 along section A-A;
- figure 4 is a section view of figure 2 along section B-B, in which the magnetic separation device is in the use configuration;

- figure 5 is a section view alike to that of figure 4, in which the magnetic separation device is in the washing configuration;
- figure 6 is a section view alike to that of figure 4, and relative to a second embodiment of the magnetic separation device, in which the magnetic separation device is in the use configuration;
- figure 7 is a section view alike to that of figure 6, in which the magnetic separation device is in the washing configuration;
- figures 8 and 9 are respective lateral views of the second container of the first embodiment of the magnetic separation device illustrated in figures from 1 to 5;
- figure 10 is a section view of the second container of figure 9 along section C-C;
- figures 11 and 12 are respective lateral views of the second container of the second embodiment of the magnetic separation device illustrated in figures 6 and 7;
- figure 13 is a section view of the second container of figure 11 along section D-D;
- figures 14, 15 and 16 are plan illustrations respectively of the body, the cover and the fastening means of the first container.

With reference to the appended tables of drawings, reference numeral (1) denotes in its entirety a magnetic separation device that is the object of the present invention.

A magnetic separation device (1) for separating ferrous material contained in a liquid circulating in a heating circuit (or possibly a cooling circuit) comprises: a first container (2) for liquids comprising an inlet (20) for a liquid comprising ferrous material, an outlet (21) for the liquid, a discharge (22) for the liquid and a first through-hole (23); a magnet (4).

Further, the magnetic separation device (1) comprises: a second container (3) for liquids arranged internally of the first container (2), which second container (3) comprises a plurality of openings (30), for passage of the liquid through the second container (3), and a second through-hole (31); a casing (5) for containing the magnet (4), which enables inserting the magnet (4) internally thereof and extracting the magnet (4) from an inside thereof.

The casing (5) is arranged at least partially internally of the second container (3), engaging the first through-hole (23) and the second through-hole (31) so as to be accessible from outside the magnetic separation device (1), for inserting the magnet (4) internally of the casing (5) and for extracting the magnet (4) from inside the casing (5).

The magnetic separation device (1) is designed for assuming a use configuration (A), in which the inlet (20) is in fluid communication with the outlet (21) and the magnet (4) is inserted in the casing (5), and a washing configuration (B), in which the inlet (20) is in fluid communication with the discharge (22) and the magnet (4) is extracted from the casing (5).

The openings of the plurality of openings (30) of the second container (3) are reciprocally arranged so that when the device is in the use configuration (A), the liquid crosses the second container (3) and strikes the casing (5) so that the magnet (4) attracts the ferrous material contained in the liquid, and so that when the device is in the washing configuration (B), the liquid crosses the second container (3) drawing the ferrous material towards the discharge (22).

The second container (3) can have a circular transversal section. Further, the second container (3) can have a longitudinal extension along a relative development axis (X). The casing (5) can have a circular transversal section.

The second container (3) and the casing (5) are preferably arranged coaxially to one another.

In detail, the second container (3), the first through-hole (23), the second through-hole (31) and the casing (5) can be coaxial to one another.

The second container (3) is preferably made of a plastic material. The casing (5) can be made of a plastic material. The first container (2) can also be made of a plastic material.

The first container (2) is preferably arranged so that the discharge (22) is facing downwards. Advantageously, when the magnetic separation device (1) is in the washing configuration (B), the force of gravity facilitates the exit of the ferrous material through the discharge (22).

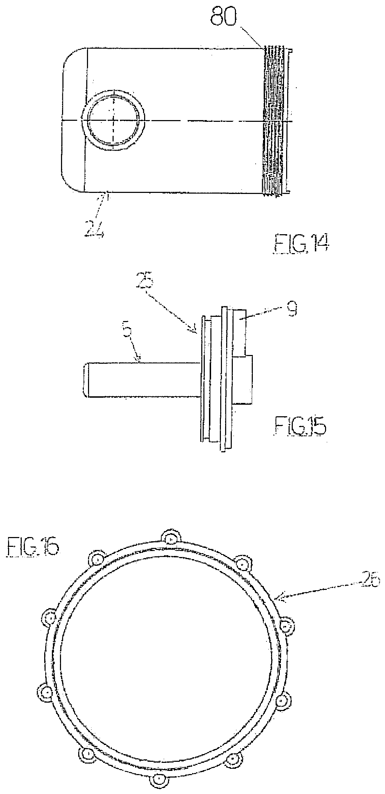

With reference to figures 14-16, the first container (2) preferably comprises: a body (24) having a beaker conformation; a cover (25), rotatable with respect to the body (24); fastening means (26) (for example a ring-nut) for fixing the cover (25) to the body (24). Further, the casing (5) and the second container (3) are solidly constrained to the cover (25) of the first container (2) (in figure 14, for the sake of clarity, the second container has not been shown (3)).

In greater detail, the beaker-conformed body (24) is provided with a threading (80) made in proximity of the relative external edge (figure 14); the cover (25), which bears the casing (5) and the second container (3), is rested against the beaker-conformed body (24) so that the casing (5) and the second container (3) are inserted internally of the beaker-conformed body (24); lastly, the ring-nut (26) is screwed onto the threading (80) of the beaker-conformed body (24) so as to keep the cover (25) pressed against the beaker-conformed body (24), thus preventing, thanks to seals that are not illustrated, leakage of liquid towards the outside.

To rotate the cover (25) with respect to the beaker-conformed body (24), for example by a hundred and eighty degrees, it is sufficient to loosen the ring-nut (26), rotate the cover (25) and lastly tighten the ring-nut (26).

With reference to figure 15, the magnetic separation device (1) can comprise a breather valve (9) for exit of the air from the first container (2). In particular, the breather valve (9) can be arranged at the cover (25).

The magnet (4) can be a permanent magnet.

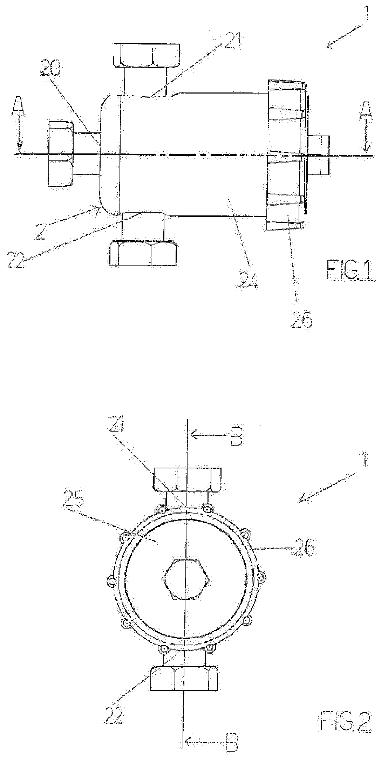

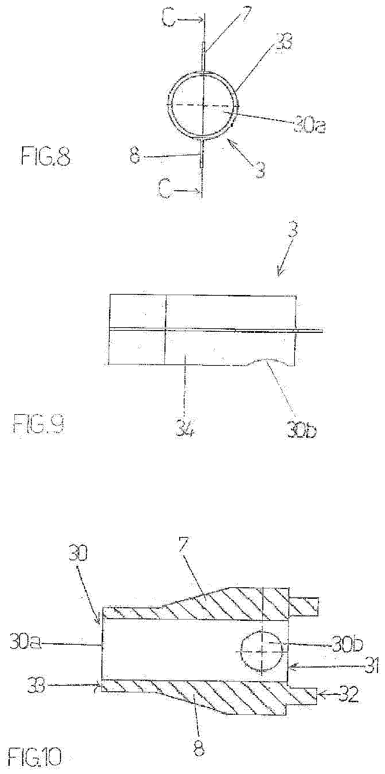

With reference to figures 1-5 and 8-10, in the following a description is made of a first preferred embodiment of the magnetic separation device of the present invention.

According to the first embodiment, the second container (3) can comprise a first wall (32) in which the second through-hole (31) is afforded, a second wall (33) opposite the first wall (32) and at least a third wall (34) conjoining the first wall (32) and the second wall (33). The plurality of openings (30) can comprise a first opening (30a) at the second wall (33) and a second opening (30b) at the third wall (34) and in proximity of the magnet (4), when the magnet (4) is inserted in the casing (5).

Further, the first container (2) and the second container (3) can be reciprocally arranged in such a way that the first opening (30a) of the second container (3) is hydraulically connected to the inlet (20) so that the liquid coming from the inlet (20) enters the second container (3).

In detail, the first container (2) and the second container (3) can be reciprocally arranged in such a way that the first opening (30a) of the second container (3) is arranged at the inlet (20). The inlet (20) therefore can entirely face the second wall (33) (i.e. the second wall (33) can have an area that is equal to or greater than the area of the transversal section of the inlet (20) so that the liquid, coming from the inlet (20), completely enters the second container (3)).

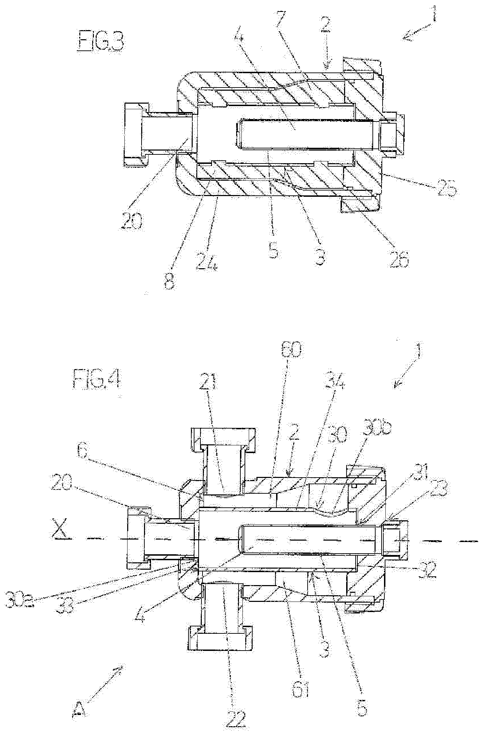

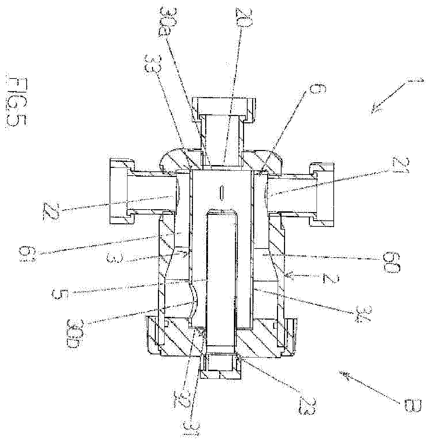

In a case where the outlet (21) is arranged in greater proximity to the second wall (33) of the second container (3) than to the first wall (32), the second opening (30b) can be arranged closer to the first wall (32) with respect to the second wall (33) (figures 4 and 5).

The second container (3) is preferably rotatable so that when the magnetic separation device (1) is in the use configuration (A), the second opening (30b) faces the outlet (21) and so that when the magnetic separation device (1) is in the washing configuration (B), the second opening (30b) faces the discharge (22).

In fact, in the use configuration (A), the ferrous material is not only retained by the magnet (4) at the casing (5) but can accumulate at the third wall (34) of the second container (3) (in particular, the ferrous material tends to accumulate at the portion of third wall (34) facing towards the outlet (21), i.e. the portion of the third wall (34) in which the second opening (30b) is fashioned).

Therefore, the rotation of the second container (3) enables turning the portion of third wall (34), in which the ferrous material previously accumulated, towards the discharge (22). The ferrous material that has accumulated at the third wall (34) of the second container (3) will also advantageously be drawn towards the discharge (22).

In particular, the outlet (21) and the discharge (22) can be arranged opposite; in this case the rotation of the second container (3) will be about 180 degrees.

In a case where the second container (3) is rotatable, the first container (2) and the second container (3) can be reciprocally arranged so as to define between them a first chamber (6) and wherein the magnetic separation device (1) can comprise a first wing (7) and a second wing (8).

The first wing (7) and the second wing (8) are reciprocally arranged and conformed so that the first chamber (6) is divided into a second chamber (60) communicating with the outlet (21) and a third chamber (61) communicating with the discharge (22), and so that when the magnetic separation device (1) is in the use configuration (A), the second opening (30b) is in communication with the second chamber (60) and, when the magnetic separation device (1) is in the washing configuration (B), the second opening (30b) is in communication with the third chamber (61).

The second chamber (60) and the third chamber (61) advantageously enable optimising the washing operation and reducing the probability that the ferrous material, during the washing operation, moves towards the outlet (22).

With reference to figure 4, the magnetic separation device (1) is in the use configuration (A), the second opening (30b) is facing the outlet (21) and is in communication with the second chamber (60) in turn communicating with the outlet (21). Therefore, the liquid crosses: the inlet (20); the first opening (30a) of the second container (3); the second opening (30b) of the second container (3), after having struck the casing (5); the second chamber (60); the outlet (21).

Consequently, the ferrous material will be retained by the magnet at the casing (5), the internal surface of the wall of the second container (3) and the part of the external surface of the wall of the second container (3) which is arranged internally of the second chamber (60).

In order to proceed to the washing of the magnetic separation device (1), the second container (3) is rotated so that the second opening (30b) is in communication with the third chamber (61). In this way, the casing (5) and the internal surface of the wall of the second container (3) are connected to the third chamber (61) (no longer with the second chamber (60)). Further, the part of the external surface of the wall of the second container (3) at which ferrous material collected during use is in the third chamber (61).

At this point, by extracting the magnet (4) from the casing (5), the ferrous material tends to precipitate, remaining confined in the third chamber (61). In particular, with reference to figure 5, the liquid crosses the inlet (20); the first opening (30a) of the second chamber (3), the second opening (30a) of the second container (3); the third chamber (61); the discharge (22). Consequently, the liquid draws the ferrous material towards the discharge (22) without any risk of the ferrous material moving towards the outlet (21).

The first wing (7) and the second wing (8) are preferably fixed to the second container (3) (figure 3). With the rotation of the second container (3), the first wing (7) and the second wing (8) advantageously exert a cleaning action on the wall of the first container (2).

Alternatively, in an embodiment that is not illustrated, the first wing (7) and the second wing (8) might be fixed to the first container (2). With the rotation of the second container (3), the first wing (7) and the second wing (8) would advantageously exert a cleaning action on the wall of the second container (3).

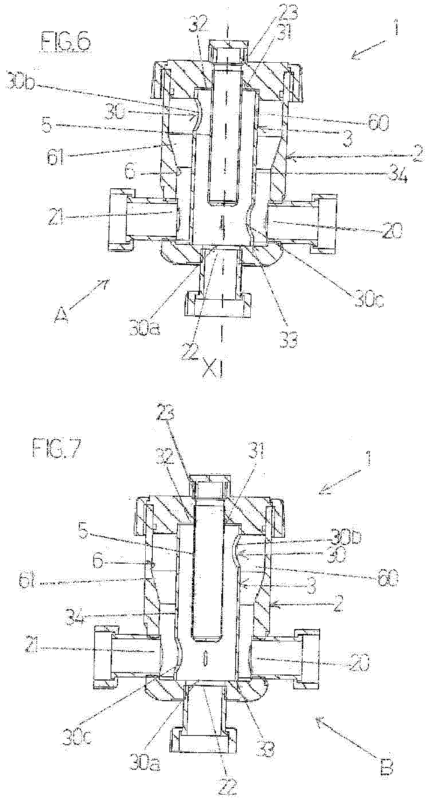

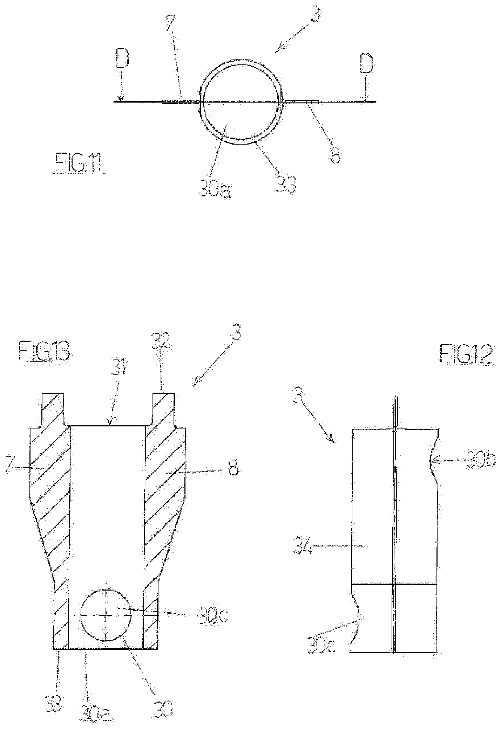

With reference to figures 6, 7, 11-13, the following is a description of a second preferred embodiment of the magnetic separation device of the present invention.

In accordance with the second preferred embodiment, the magnetic separation device (1) is preferably such that: the second container (3) comprises a first wall (32) in which the second through-hole (31) is afforded, a second wall (33) opposite the first wall (32) and at least a third wall (34) conjoining the first wall (32) and the second wall (33); the plurality of openings (30) comprises a first opening (30a) at the second wall (33), a second opening (30b) at the third wall (34) and in proximity of the magnet (4), when the magnet (4) is inserted in the casing (5), and a third opening (30c) at the third wall (34); the first container (2) and the second container (3) are reciprocally arranged in such a way as to define between them a first chamber (6) and so that the first opening (30a) of the second container (3) is hydraulically connected to the discharge (22) so that the liquid from the second container (3) exits from the discharge (22).

Further in accordance with the second preferred embodiment, the magnetic separation device (1) comprises a first wing (7) and a second wing (8).

The first wing (7) and the second wing (8) are reciprocally arranged and conformed so as to divide the first chamber (6) into a second chamber (60) communicating with the inlet (20) and a third chamber (61) communicating with the outlet (21), if the first opening (30a) of the second container (3) is hydraulically connected to the discharge (22).

Further, the second container (3) is rotatable so that when the magnetic separation device (1) is in the use configuration (A), the third opening (30c) is in communication with the second chamber (60) and the second opening (30b) is in communication with the third chamber (61) and, when the magnetic separation device (1) is in the washing configuration (B), the third opening (30c) is in communication with the third chamber (61) and the second opening (30b) is in communication with the second chamber (60).

The second chamber (60) and the third chamber (61) advantageously enable optimising the washing operation and reducing the probability that the ferrous material, during the washing operation, moves towards the outlet (21).

In a case where the inlet (20) and outlet (21) are arranged in greater proximity to the second wall (33) of the second container (3) than to the first wall (32), the second opening (30b) can be arranged closer to the first wall (32) with respect to the second wall (33) (figures 6 and 7). Further, the third opening (30c) can be arranged closer to the second wall (33) with respect to the first wall (32).

In detail, the first container (2) and the second container (3) can be reciprocally arranged in such a way that the first opening (30a) of the second container (3) is arranged at the discharge (22). The discharge (22), therefore, can fully face the second wall (33) (i.e. the second wall (33) can have an area equal to or greater than the area of the transversal section of the discharge (22)).

With reference to figure 6, the magnetic separation device (1) is in the use configuration (A), the second opening (30b) is facing the outlet (21) and is in communication with the third chamber (61) in turn communicating with the outlet (21), and the third opening (30c) is facing towards the inlet (20) and is in communication with the second chamber (60). Therefore, the liquid crosses: the inlet (20); the second chamber (60), the third opening (30c) of the second container (3); the second opening (30b) of the second container (3), after having struck the casing (5); the third chamber (61); the outlet (21).

Consequently, the ferrous material will be retained by the magnet (4), at the casing (5), of the internal surface of the wall of the second container (3) and of the part of the external surface of the wall of the second container (3) which is arranged internally of the third chamber (61).

In order to proceed to the washing of the magnetic separation device (1), the second container (3) is rotated so that the second opening (30b) is in communication with the second chamber (60) and the third opening (30c) is in communication with the third chamber (61). In this way, the part of the external surface of the wall of the second container (3), at which ferrous material collected during use, is in the second chamber (60), so as to be liable to being struck by the liquid in the washing configuration.

At this point, by extracting the magnet (4) from the casing (5), the ferrous material tends to precipitate. In particular, with reference to figure 7, the liquid crosses the inlet (20); the second chamber (60); the second opening (30b) of the second container (3); the first opening (30a) of the second container (3); the discharge (22). Consequently, the liquid draws the ferrous material towards the discharge (22) without any risk of the ferrous material moving towards the outlet (21).

The first wing (7) and the second wing (8) are preferably fixed to the second container (3) (figure 3). With the rotation of the second container (3), the first wing (7) and the second wing (8) advantageously exert a cleaning action on the wall of the first container (2).

Alternatively, in an embodiment that is not illustrated, the first wing (7) and the second wing (8) might be fixed to the first container (2). With the rotation of the second container (3), the first wing (7) and the second wing (8) advantageously exert a cleaning action on the wall of the second container (3).

In the following a method is described for separating by means of a magnetic separation device (1) ferrous material contained in a liquid circulating in a heating circuit and for washing the magnetic separation device (1) of the present invention.

The method comprises steps of: providing a magnetic separation device (1) according to any one of the above-described embodiments; arranging the magnet (4) in the casing (5); placing the inlet (20) and outlet (21) in fluid communication, after having arranged the magnet (4) in the casing (5), so that the liquid crosses the second container (3) and strikes the casing (5) so that the magnet (4) attracts the ferrous material contained in the liquid, and subsequently closing the inlet (20); after having closed the inlet (20), extracting the magnet (4) from the casing (5) and setting the inlet (20) and the discharge (22) in fluid communication so that the liquid crosses the second container (3) drawing the ferrous material towards the discharge (22).

Further, in a case in which the step of providing a magnetic separation device (1) includes providing a magnetic separation device (1) according to the first embodiment of the device of the present invention in which the second container (3) is rotatable, the method can comprise, after having closed the inlet (20) and before extracting the magnet (4), a step of rotating the second container (3) so that the second opening (30b) is facing towards the discharge (22).

Instead, in a case in which the step of providing a magnetic separation device (1) includes providing a magnetic separation device (1) according to the second embodiment, the method can comprise, after having closed the inlet (20) and before extracting the magnet (4), a step of rotating the second container (3) so that the third opening (30c) is in communication with the third chamber (61) and the second opening (30b) is in communication with the second chamber (60).

## Claims

1. A magnetic separation device (1) for separating ferrous material contained in a liquid circulating in a heating circuit, comprising:
a first container (2) for liquids comprising an inlet (20) for a liquid comprising ferrous material, an outlet (21) for the liquid, a discharge (22) for the liquid and a first through-hole (23);
a magnet (4);
the magnetic separation device (1) being **characterised in that** it comprises:
a second container (3) for liquids arranged internally of the first container (2), which second container (3) comprises a plurality of openings (30), for passage of the liquid through the second container (3), and a second through-hole (31);
a casing (5) for containing the magnet (4), which enables inserting the magnet (4) internally thereof and extracting the magnet (4) from an inside thereof, which casing (5) is arranged at least partially internally of the second container (3), engaging the first through-hole (23) and the second through-hole (31) so as to be accessible from outside the magnetic separation device (1), for inserting the magnet (4) internally of the casing (5) and for extracting the magnet (4) from inside the casing (5);
the magnetic separation device (1) being designed so that it can assume a use configuration (A), in which the inlet (20) is in fluid communication with the outlet (21) and the magnet (4) is inserted in the casing (5), and a washing configuration (B), in which the inlet (20) is in fluid communication with the discharge (22) and the magnet (4) is extracted from the casing (5),
the openings of the plurality of openings (30) of the second container (3) being reciprocally arranged so that when the device is in the use configuration (A), the liquid crosses the second container (3) and strikes the casing (5) so that the magnet (4) attracts the ferrous material contained in the liquid, and so that when the device is in the washing configuration (B), the liquid crosses the second container (3) drawing the ferrous material towards the discharge (22).

2. The magnetic separation device (1) of the preceding claim, wherein:
the second container (3) comprises a first wall (32) in which the second through-hole (31) is afforded, a second wall (33) opposite the first wall (32) and at least a third wall (34) conjoining the first wall (32) and the second wall (33);
the plurality of openings (30) comprises a first opening (30a) at the second wall (33) and a second opening (30b) at the third wall (34) and in proximity of the magnet (4), when the magnet (4) is inserted in the casing (5);
the first container (2) and the second container (3) are reciprocally arranged in such a way that the first opening (30a) of the second container (3) is hydraulically connected to the inlet (20) so that the liquid coming from the inlet (20) enters the second container (3).

3. The magnetic separation device (1) of the preceding claim, wherein the second container (3) is rotatable so that when the magnetic separation device (1) is in the use configuration (A), the second opening (30b) faces the outlet (21) and so that when the magnetic separation device (1) is in the washing configuration (B), the second opening (30b) faces the discharge (22).

4. The magnetic separation device (1) of the preceding claim, wherein the first container (2) and the second container (3) are reciprocally arranged so as to define between them a first chamber (6) and wherein the magnetic separation device (1) comprises a first wing (7) and a second wing (8);
the first wing (7) and the second wing (8) being reciprocally arranged and conformed so that the first chamber (6) is divided into a second chamber (60) communicating with the outlet (21) and a third chamber (61) communicating with the discharge (22), and so that when the magnetic separation device (1) is in the use configuration (A), the second opening (30b) is in communication with the second chamber (60) and, when the magnetic separation device (1) is in the washing configuration (B), the second opening (30b) is in communication with the third chamber (61).

5. The magnetic separation device (1) according to claim 1, wherein:
the second container (3) comprises a first wall (32) in which the second through-hole (31) is afforded, a second wall (33) opposite the first wall (32) and at least a third wall (34) conjoining the first wall (32) and the second wall (33);
the plurality of openings (30) comprises a first opening (30a) at the second wall (33), a second opening (30b) at the third wall (34) and in proximity of the magnet (4), when the magnet (4) is inserted in the casing (5), and a third opening (30c) at the third wall (34);
the first container (2) and the second container (3) are reciprocally arranged in such a way as to define between them a first chamber (6) and so that the first opening (30a) of the second container (3) is hydraulically connected to the discharge (22) so that the liquid from the second container (3) exits from the discharge (22);
the magnetic separation device (1) comprises a first wing (7);
the magnetic separation device (1) comprises a second wing (8);
the first wing (7) and the second wing (8) are reciprocally arranged and conformed so as to divide the first chamber (6) into a second chamber (60) communicating with the inlet (20) and a third chamber (61) communicating with the outlet (21), if the first opening (30a) of the second container (3) is hydraulically connected to the discharge (22);
the second container (3) is rotatable so that when the magnetic separation device (1) is in the use configuration (A), the third opening (30c) is in communication with the second chamber (60) and the second opening (30b) is in communication with the third chamber (61) and, when the magnetic separation device (1) is in the washing configuration (B), the third opening (30c) is in communication with the third chamber (61) and the second opening (30b) is in communication with the second chamber (60).

6. The magnetic separation device (1) of claim 4 or 5, wherein the first wing (7) and the second wing (8) are fixed to the second container (3).

7. The magnetic separation device (1) of any one of the preceding claims, wherein the second container (3) and the casing (5) are arranged coaxially to one another.

8. The magnetic separation device (1) of any one of the preceding claims, wherein the first container (2) is arranged so that the discharge (22) is facing downwards.

9. The magnetic separation device (1) of any one of the preceding claims, wherein the first container (2) comprises: a body (24) having a beaker conformation; a cover (25), rotatable with respect to the body (24); fixing means (26) for fixing the cover (25) to the body (24); the casing (5) being solidly constrained to the cover (25) of the first container (2).

10. A method for separating by means of a magnetic separation device (1) ferrous material contained in a liquid circulating in a heating circuit and for washing the magnetic separation device (1), comprising steps of:
providing a magnetic separation device (1) according to any one of the preceding claims;
arranging the magnet (4) in the casing (5);
placing the inlet (20) and outlet (21) in fluid communication, after having arranged the magnet (4) in the casing (5), so that the liquid crosses the second container (3) and strikes the casing (5) so that the magnet (4) attracts the ferrous material contained in the liquid, and subsequently closing the inlet (20);
after having closed the inlet (20), extracting the magnet (4) from the casing (5) and setting the inlet (20) and the discharge (22) in fluid communication so that the liquid crosses the second container (3) drawing the ferrous material towards the discharge (22).

11. The method of the preceding claim, wherein the step of providing a magnetic separation device (1) includes providing a magnetic separation device (1) according to claim 3 and wherein the method comprises, after having closed the inlet (20) and before extracting the magnet (4), a step of rotating the second container (3) so that the second opening (30b) is facing towards the discharge (22).

12. The method of claim 10, wherein the step of providing a magnetic separation device (1) includes providing a magnetic separation device (1) according to claim 5 and wherein the method comprises, after having closed the inlet (20) and before extracting the magnet (4), a step of rotating the second container (3) so that the third opening (30c) is in communication with the third chamber (61) and the second opening (30b) is in communication with the second chamber (60).
